# EUROPÄISCHE PATENTSCHRIFT

(11) **EP 1 998 990 B1**
(45) Veröffentlichungstag und Bekanntmachung des Hinweises auf die Patenterteilung: **07.07.2010**
(21) Anmeldenummer: 07726882.9
(22) Anmeldetag: 14.03.2007
(51) Int. Cl.: B60T 8/36, F16K 31/06, H01F 7/16

(54) **ELEKTROMAGNETVENTIL**
SOLENOID VALVE
ELECTROVANNE

(30) Priorität: 21.03.2006 DE 102006012805; 27.04.2006 DE 102006019464
(43) Veröffentlichungstag der Anmeldung: 10.12.2008
(73) Patentinhaber: Continental Teves AG & Co. oHG, 60488 Frankfurt (DE)
(72) Erfinder: VOSS, Christoph, 60386 Frankfurt am Main (DE)
(86) Internationale Anmeldenummer: PCT/EP2007/052387
(87) Internationale Veröffentlichungsnummer: WO 2007/107486

(56) Entgegenhaltungen:
- EP-A1- 0 728 971
- DE-A1- 3 620 239
- DE-A1- 3 802 648
- DE-A1- 4 023 660
- DE-C1- 4 013 425

## Beschreibung

Die Erfindung betrifft ein Elektromagnetventil nach dem Oberbegriff des Patentanspruchs 1.

Aus der DE 102 54 342 A1 ist bereits ein Elektromagnetventil bekannt geworden, dessen Ventilgehäuse ein mit einem Magnetanker zusammenwirkendes Ventilschließglied aufnimmt, das auf einen Ventilsitz im Ventilgehäuse gerichtet ist. Zur Betätigung des Magnetankers ist eine Magnetspule vorgesehen, die außerhalb eines hülsenförmigen Ventilgehäuseabschnitts angeordnet ist. Zur präzisen Ausrichtung des Ventilschließgliedes gegenüber dem Ventilsitz ist an einer Ventilsitzhülse ein Zentrierkörper gelenkig angeordnet, in den das Ventilschließglied eintaucht.

Die Anordnung eines Zentrierkörpers an der Ventilsitzhülse stellt einen zusätzlichen Bauaufwand dar. Außerdem vergröβert sich hierdurch die Bauhöhe des Elektromagnetventils und der Magnetanker muss außerdem unter Berücksichtigung ungünstiger Reibverhältnisse entlang seinem Außenmantel im Ventilgehäuse geführt werden.

Aus der DE 36 20 239 A1 ist ein Elektromagnetventil mit den im Oberbegriff des Patentanspruchs 1 angegebenen Merkmalen bekannt, dessen in einem Ventilgehäuse aufgenommener Magnetanker an einer Ventilsitzhülse zentriert ist, wozu sich die Ventilsitzhülse in eine Sackbohrung des Magnetankers erstreckt, in der das Ventilschließglied angeordnet ist. Die Ventilsitzhülse ist wahlweise entweder in eine ferromagnetischen Topf oder einem ferromagnetischen Deckel eingepresst, wobei der Deckel und der Topf das Ventilgehäuse bilden.

Es ist die Aufgabe der vorliegenden Erfindung, ein Elektromagnetventil der angegebenen Art derart zu verbessern, dass eine möglichst gute Dicht- und Montagebefestigung zustande kommt.

Diese Aufgabe wird erfindungsgemäß für ein Elektromagnetventil der angegebenen Art mit den kennzeichnenden Merkmalen des Patentanspruchs 1 gelöst.

Weitere Merkmale und Vorteile der Erfindung gehen im Folgenden aus der Beschreibung eines Ausführungsbeispiels hervor.

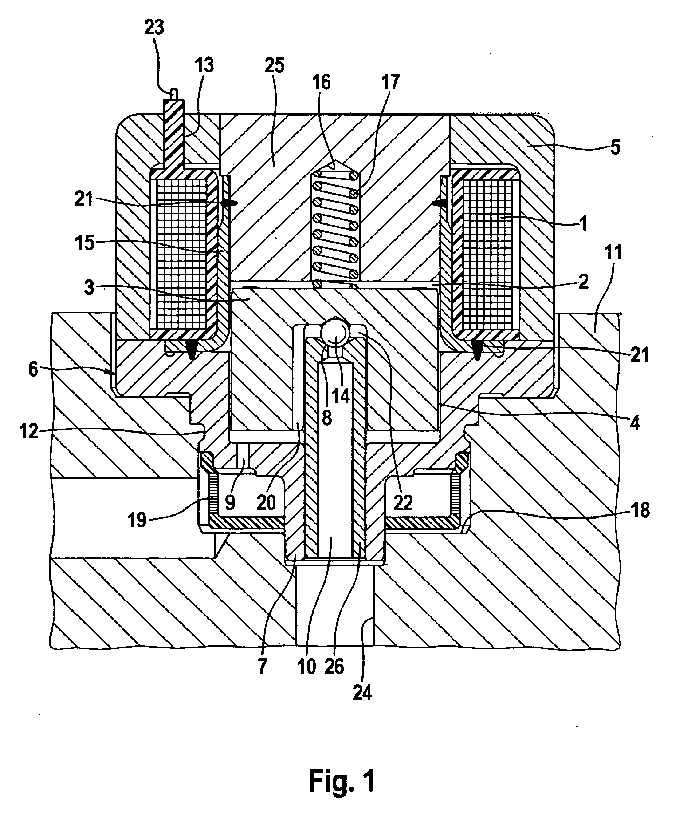

Die Figur 1 zeigt ein im Längsschnitt abgebildetes, als 2/2-Wege-Sitzventil ausgelegtes Elektromagnetventil, das ein in Patronenbauweise ausgeführtes Ventilgehäuse 6 aufweist, welches ein von einem Magnetanker 3 betätigbares Ventilschließglied 14 aufnimmt, das konzentrisch auf einen Ventilsitz 8 im Ventilgehäuse 6 gerichtet ist.

Zur Betätigung des Magnetankers 3 ist eine Magnetspule 1 auβen am dünnwandigen Hülsenabschnitt 15 des Ventilgehäuses 6 angeordnet, die von einem den Magnetfluss leitenden Jochblech 5 umschlossen ist. Der den Magnetfluss nicht leitende Hülsenabschnitt 7 des Ventilgehäuses 6 ist von einem Magnetkern 25 verschlossen, wobei eine Schweißnaht 21 eine dauerhafte Verbindung zwischen dem Hülsenabschnitt 15 und dem Magnetkern 25 herstellt. Eine weitere Schweißnaht 21 stellt die notwendige Verbindung des nicht magnetischen Hülsenabschnitts 15 mit der den Magnetfluss leitenden Ventilpatrone sicher.

Zwischen dem Magnetkern 25 und dem Magnetanker 3 befindet sich ein Axialspalt 2, der ebenso wie ein zwischen einer Mantelfläche des Magnetankers 3 und dem Ventilgehäuse 6 vorgesehenen Radialspalt 4 während einer elektromagnetischen Erregung von Magnetfeldlinien überbrückt ist.

Das den Magnetfluss leitende Unterteil des Ventilgehäuses 6 bildet die Ventilpatrone, auf deren Oberseite das magnetische Jochblech 5 anliegt. Der untere Bereich der Ventilpatrone nimmt den Druckmittelkanal 9 und die mit dem weiteren Druckmittelkanal 10 versehene Ventilsitzhülse 26 auf. Das Jochblech 5 ist zur Aufnahme der Magnetspule 1 entsprechend an die Magnetspulenkontur angepasst.

Zur elektrischen Energieversorgung der Magnetspule 1 ist das die Magnetspule 1 aufnehmende Jochblech 5 mit einer Durchgangsöffnung 13 versehen, durch die ein mit der Magnetspule 1 verbundener elektrischer Kontakt 23 flüssigkeitsdicht hindurchgeführt ist.

Um die Magnetkraftwirkung am Magnetanker 3 möglichst effektiv zu gestalten und die Bauhöhe des Elektromagnetventils möglichst gering zu halten, weist der Magnetanker 3 ein Höhen-/Breitenverhältnis auf, das vom Betrage her gleich oder kleiner Eins ist, so dass in der Praxis die Höhe des Magnetankers 3 zwangsläufig den Außendurchmesser des Magnetankers 3 nicht überschreitet.

Um eine möglichst kostengünstige Herstellung zu ermöglichen, ist das Jochblech 5 und der Hülsenabschnitt 15 als Tiefziehteil, der Magnetanker 3 und der Magnetkern 25 als Kaltschlag- oder Fließpressteil ausgebildet. Auch die Ventilpatrone ist als Kaltschlagteil aus einem rohrförmigen Rohling hergestellt, dessen Außenkontur eine Gehäusestufe mit einer Ringnut 12 aufweist, in die zur Befestigung und Abdichtung des Ventilgehäuses 6 im Ventilblock 11 das gegenüber dem Ventilpatrone weichere Material des Ventilblocks 11 plastisch verdrängt ist.

Ferner weist das abgebildete Elektromagnetventil ein am unteren, zapfenförmig abgesetzten Vorsprung 7 der Ventilpatrone angeordnetes Filterelement 19 auf, das als Ringfilterelement ausgeführt ist und Schmutzeintrag in den in der Regel kalibrierten Druckmittelkanal 9 verhindert. Zur Reduzierung der Ventilbauhöhe ist der Druckmittelkanal 9 unmittelbar parallel zum Druckmittelkanal 10 in einen Zwischenboden oberhalb des zapfenförmig abgestuften Ventilgehäuses 6 eingelassen, der am unteren zapfenförmigen Ende im Durchmesser soweit verkleinert ist, dass er sich mit verhältnismäßig geringer Einpresskraft am Boden der Ventilaufnahmebohrung 18 in eine Kanalbohrung (Ventilanschluss 24) dichtend erstreckt.

Das in Figur 1 in Grundstellung geschlossene Elektromagnetventil weist eine Sackbohrung 16 im Magnetkern 25 auf, in der eine Druckfeder 17 eingesetzt ist, die sich auf den Mangetanker 3 erstreckt. An der von der Druckfeder 17 abgewandten Stirnseite des Magnetankers 3 ist eine Sackbohrung 22 vorgesehen, in der auch das kugelförmige Ventilschließglied 14 aufgenommen ist, das unter der Wirkung der Druckfeder 17 auf den trichterförmigen Ventilsitz 8 gepresst ist. Der Ventilsitz 8 ist am oberen Ende der im Ventilgehäuse 6 eingepressten Ventilsitzhülse 26 angeordnet, die sich über nahezu die gesamte Tiefe der Sackbohrung 22 in den Magnetanker 3 erstreckt. Der Magnetanker 3 ist somit auf einfache und besonders kompakte Weise präzise entlang der Ventilsitzhülse 26 geführt und hierdurch auch entsprechend zentriert, sodass auf eine aufwendige Außenzentrierung des Magnetankers 3 entlang der Ventilgehäusewand verzichtet werden kann.

Das Ventilschließglied 14 ist mittels einer Kondensatorschweißung mittig versenkt am Boden der Sackbohrung 22 des Magnetankers 3 auf einfache Weise sicher befestigt. Zur präzisen Zentrierung des Ventilschließgliedes 14 gegenüber dem Ventilsitz 8 erstreckt sich die Ventilsitzhülse 26 mit geringem Spiel in die Sackbohrung 22, sodass der Magnetanker 3 auf der Ventilsitzhülse 26 eine reibungsarme Innenzentrierung aufweist. Die Mantelfläche der Sackbohrung 22 weist eine Längsnut 20 auf, sodass in der elektromagnetisch geöffneten Ventilstellung eine im Querschnitt hinreichend große, widerstandsarme Hydraulikverbindung zwischen den beiden Ventilanschlüssen 24 im Ventilblock 11 gewährleistet ist.

Die gewünschte Dicht- als auch Befestigungswirkung des zapfenförmigen Vorsprungs 7 in der Kanalbohrung (vertikaler Ventilanschluss 24) wird durch die Ausführung als Sägezahn- bzw. Tannenzapfenkontur am rohrförmigen Vorsprung 7 begünstigt. Alternativ können auch mehrere Rillen am Umfang des Vorsprungs 7 für die geforderte Befestigungs- und Dichtwirkung sorgen.

Das vorgestellte Elektromagnetventil kommt bevorzugt in einem schlupfgeregelten Kfz-Bremssystem zur Anwendung, wozu der nur abschnittsweise abgebildete Ventilblock 11 eine Vielzahl von Ventilaufnahmebohrungen 18 aufweist, die in mehreren Reihen zur Aufnahme des stromlos geöffneten Elektromagnetventils in den Ventilblock 11 eingelassen sind. Hierdurch ergibt sich ein besonders kompaktes Bremsgerät, dessen Ventilblock 11 aufgrund der geringen Bauhöhe der abgebildeten Elektromagnetventile insgesamt sehr flach baut. Im Zusammenspiel mit einem stromabwärts zu jeder Radbremse angeordneten weiteren Elektromagnetventil lässt sich mittels einer geeigneten Steuerelektronik im Schlupfregelfall den Bremsdruckauf- und den Bremsdruckabbau in der Radbremse regeln.

Zusammenfassend ergibt sich durch die vorgeschlagenen erfindungsgemäßen Merkmale ein besonders niedrig bauendes Elektromagnetventil mit einer gegenüber den bisher bekannten Ventilen besonders präzisen, reibungsarmen Zentrierung des Magnetankers 3 auf einer Ventilsitzhülse 26, wodurch zwangsläufig auch das Ventilschließglied 14 stets exakt zum Ventilsitz 8 ausgerichtet ist.

Wie aus Fig. 1 ersichtlich ist, sind alle zitierten Bauteile rotationssymmetrisch zur Ventillängsachse ausgerichtet, wodurch eine automatengerechte Herstellung und Montage der Bauteile begünstigt wird.

### Bezugszeichenliste

- 1: Magnetspule
- 2: Axialspalt
- 3: Magnetanker
- 4: Radialspalt
- 5: Jochblech
- 6: Ventilgehäuse
- 7: Vorsprung
- 8: Ventilsitz
- 9: Druckmittelkanal
- 10: Druckmittelkanal
- 11: Ventilblock
- 12: Ringnut
- 13: Durchgangsöffnung
- 14: Ventilschließglied
- 15: Hülsenabschnitt
- 16: Sackbohrung
- 17: Druckfeder
- 18: Ventilaufnahmebohrung
- 19: Filterelement
- 20: Längsnut
- 21: Schweißnaht
- 22: Sackbohrung
- 23: Kontakt
- 24: Ventilanschluss
- 25: Magnetkern
- 26: Ventilsitzhülse

## Patentansprüche

1. Elektromagnetventil, welches zum Verbinden oder Trennen von Druckmittelkanälen in einem Ventilgehäuse (6) ein mit einem Magnetanker (3) zusammenwirkendes ventilschließglied (14) aufnimmt, das auf einen Ventilsitz (8) gerichtet ist, der an einer im Ventilgehäuse (6) befestigten Ventilsitzhülse (26) angeordnet ist, mit einer Magnetspule (1) zur Betätigung des Magnetankers (3), die auf einem Hülsenabschnitt (15) des Ventilgehäuses (6) aufgeschoben ist, wobei der Magnetanker (3) an der Ventilsitzhülse (26) zentriert ist, wozu sich die Ventilsitzhülse (26) in eine Sackbohrung (22) des Magnetankers (3) erstreckt, in der das Ventilschließglied (14) angeordnet ist, **dadurch gekennzeichnet, dass** das Ventilgehäuse (6) im Bereich der Ventilsitzhülse (26) als Ventilpatrone ausgeführt ist, die am unteren Ende einen rohrförmigen Vorsprung (7) aufweist, der in eine Ventilaufnahmebohrung (18) eines Ventilblocks (11) einpressbar ist.

2. Elektromagnetventil nach Anspruch 1, **dadurch gekennzeichnet, dass** die Mantelfläche der Sackbohrung (22) eine Längsnut (20) aufweist, über die in der vom Ventilsitz abgehobenen Stellung des Ventilschließgliedes (14) eine hinreichend große, widerstandsarme Hydraulikverbindung zwischen dem die Ventilsitzhülse (26) durchdringenden Druckmittelkanal (10) und dem das Ventilgehäuse (6) durchdringenden Druckmittelkanal (9) gewährleistet ist.

3. Elektromagnetventil nach Anspruch 1, **dadurch gekennzeichnet, dass** die Ventilpatrone an der vom Vorsprung (7) abgewandten Stirnfläche stoffschlüssig mit dem als separates Bauteil ausgeführten Hülsenabschnitt (15) verbunden ist, dessen von der Ventilpatrone abgewandtes Hülsenende von einem mit einer Sackbohrung (16) versehenen Magnetkern (25) verschlossen ist, der stoffschlüssig mit dem Hülsende verbunden ist.

4. Elektromagnetventil nach Anspruch 3, **dadurch gekennzeichnet, dass** in die Sackbohrung (16) eine Druckfeder (17) eingesetzt ist, die sich mit ihrem aus der Sackbohrung (16) hervorstehenden Federende am Magnetanker (3) abstützt.

5. Elektromagnetventil nach einem der vorangegangenen Ansprüche, **dadurch gekennzeichnet, dass** der Außendurchmesser des Magnetankers (3) wenigstens so groß gewählt ist wie die Höhe des Magnetankers (3).

6. Elektromagnetventil nach einem der vorangegangenen Ansprüche, **dadurch gekennzeichnet, dass** der Magnetanker (3) und der Magnetkern (25) als Kaltschlag- oder Fließpressteil und der Hülsenabschnitt (15) als Tiefziehteil ausgebildet sind.

7. Elektromagnetventil nach einem der vorangegangenen Ansprüche, **dadurch gekennzeichnet, dass** das Ventilschließglied (14) sphärisch ausgebildet ist und stoffschlüssig mittels einer Kondensatorschweißung am Boden der Sackbohrung (22) befestigt ist.

## Claims

1. Solenoid valve which, in order to connect or disconnect pressure medium ducts, accommodates in a valve housing (6) a valve closing element (14) which interacts with a magnet armature (3) and is directed toward a valve seat (8) which is arranged on a valve seat sleeve (26) which is fixed in the valve housing (6), having a magnet coil (1) for operating the magnet armature (3), which magnet coil is pushed onto a sleeve section (15) of the valve housing (6), the magnet armature (3) being centered on the valve seat sleeve (26), for which reason the valve seat sleeve (26) extends into a blind hole (22) in the magnet armature (3) in which the valve closing element (14) is arranged, **characterized in that**, in the region of the valve seat sleeve (26), the valve housing (6) is designed as a valve cartridge which, at the lower end, has a tubular projection (7) which can be pressed into a valve accommodation hole (18) in a valve block (11).

2. Solenoid valve according to Claim 1, **characterized in that** the lateral surface of the blind hole (22) has a longitudinal groove (20) by means of which a sufficiently large, low-resistance hydraulic connection is ensured between the pressure medium duct (10) passing through the valve seat sleeve (26) and the pressure medium duct (9) passing through the valve housing (6) in the position of the valve closing element (14) in which it is raised away from the valve

3. Solenoid valve according to Claim 1, **characterized in that** the valve cartridge is integrally connected to the sleeve section (15), which is designed as a separate component, at that end face which is averted from the projection (7), that end of the sleeve section which is averted from the valve cartridge being closed by a magnet core (25) which is provided with a blind hole (16) and is integrally connected to the sleeve end.

4. Solenoid valve according to Claim 3, **characterized in that** a compression spring (17), which is supported on the magnet armature (3) by way of its spring end which protrudes out of the blind hole (16), is inserted into the blind hole (16).

5. Solenoid valve according to one of the preceding claims, **characterized in that** the outside diameter of the magnet armature (3) is selected to be at least as large as the height of the magnet armature (3).

6. Solenoid valve according to one of the preceding claims, **characterized in that** the magnet armature (3) and the magnet core (25) are in the form of cold-formed or extruded parts and the sleeve section (15) is in the form of a deep-drawn part.

7. Solenoid valve according to one of the preceding claims, **characterized in that** the valve closing element (14) is spherical and is integrally fixed to the base of the blind hole (22), by means of capacitor-discharge welding.

## Revendications

1. Electrovanne qui reçoit un organe de fermeture de soupape (14) coopérant avec un induit magnétique (3) pour connecter ou séparer des canaux de fluide sous pression dans un boîtier de soupape (6), l'organe de fermeture de soupape (14) étant orienté sur un siège de soupape (8) qui est disposé sur une douille de siège de soupape (26) fixée dans le boîtier de soupape (6), avec une bobine magnétique (1) pour l'actionnement de l'induit magnétique (3), qui est poussée sur une portion de douille (15) du boîtier de soupape (6), l'induit magnétique (3) étant centré sur la douille de siège de soupape (26), de sorte que la douille de siège de soupape (26) s'étend dans un alésage borgne (22) de l'induit magnétique (3), dans lequel l'organe de fermeture de soupape (14) est disposé, **caractérisée en ce que** le boîtier de soupape (6) est réalisé dans la région de la douille de siège de soupape (26) sous forme de cartouche de soupape, qui présente à l'extrémité inférieure une saillie (7) de forme tubulaire qui peut être pressée dans un alésage de réception de soupape (18) d'un bloc de soupape (11).

2. Electrovanne selon la revendication 1, **caractérisée en ce que** la surface d'enveloppe de l'alésage borgne (22) présente une rainure longitudinale (20), par le biais de laquelle dans la position de l'organe de fermeture de soupape (14) soulevée du siège de soupape, une connexion hydraulique de faible résistance suffisamment grande est assurée entre le canal de fluide sous pression (10) traversant la douille de siège de soupape (26) et le canal de fluide sous pression (9) traversant le boîtier de soupape (6).

3. Electrovanne selon la revendication 1, **caractérisée en ce que** la cartouche de soupape est connectée au niveau de la surface frontale opposée à la saillie (7) par engagement par liaison de matière à la portion de douille (15) réalisée sous forme de composant séparé, dont l'extrémité de douille opposée à la cartouche de soupape est fermée par un noyau magnétique (25) pourvu d'un alésage borgne (16), qui est connecté par engagement par liaison de matière avec l'extrémité de douille.

4. Electrovanne selon la revendication 3, **caractérisée en ce que** dans l'alésage borgne (16) est inséré un ressort de pression (17) qui s'appuie avec son extrémité de ressort saillant hors de l'alésage borgne (16) sur l'induit magnétique (3).

5. Electrovanne selon l'une quelconque des revendications précédentes, **caractérisée en ce que** le diamètre extérieur de l'induit magnétique (3) est choisi au moins aussi grand que la hauteur de l'induit magnétique (3).

6. Electrovanne selon l'une quelconque des revendications précédentes, **caractérisée en ce que** l'induit magnétique (3) et le noyau magnétique (25) sont réalisés sous forme de partie emboutie à froid ou moulée par compression, et la portion de douille (15) est réalisée sous forme de pièce formée par emboutissage profond.

7. Electrovanne selon l'une quelconque des revendications précédentes, **caractérisée en ce que** l'organe de fermeture de soupape (14) est réalisé sous forme sphérique et est fixé par engagement par liaison de matière au moyen d'un soudage par décharge de condensateur au fond de l'alésage borgne (22).
